# EUROPEAN PATENT APPLICATION

(11) **EP 3 793 063 A1**
(43) Date of publication of application: **17.03.2021**
(21) Application number: 19196661.3
(22) Date of filing: 11.09.2019
(51) Int. Cl.: H02K 1/20, H02K 15/02

(54) **STACK OF LAMINATIONS FOR A STATOR HAVING COOLING CHANNELS**

(71) Applicant: Dana Belgium N.V., 8200 Brugge (BE)
(72) Inventor: DRUANT, Joachim, 8650 Merkem (BE); VANHEE, Steven, 8840 Staden (BE)
(74) Representative: Pfenning, Meinig & Partner mbB

(57) **Abstract**

The present invention relates to a stack (3) of laminations (8, 9) for a stator (4) of an electric machine (1),
wherein each lamination (8, 9) comprises a plurality of teeth (6), and a plurality of holes (22, 23),
wherein the laminations (8, 9) are aligned relatively to one other such that
- the teeth (6) form winding spaces (30) for receiving stator windings, and
- the holes (22, 23) form at least one axially extending cooling channel (25, 35) inside the stack (3),
wherein adjacent holes (22, 23) of at least two adjacent laminations (8, 9) are geometrically different.

## Description

The present invention relates to a stack of laminations for a stator. At least one axially extending cooling channel is formed inside the stack. The stator can be part of an electric machine such as an electric motor or an electric generator.

An electric motor can comprise a stator and a rotor rotatably mounted with respect to the stator. By energizing windings of the stator with an alternating current the rotor starts rotating. However, during operation of the electric motor, electric current energizing the windings results in heating of the windings due to the inherent resistance of the windings. Such heat can result in insulation breakdown and thermal distortion of the machine. Moreover, such heat limits the output power of the rotor.

Cooling an electric motor or generator can lead to a higher power density thereof. This facilitates downsizing of the machines, since a smaller machine can be used having the same power as its uncooled equivalent. Thus, in order to increase power density of electric motors and generators, it can be beneficial to provide a cooling system to cool the respective machine.

Some prior art solutions provide cooling jackets that are press or shrink fitted around a stator component of the machine. However, providing additional cooling jackets increases the overall dimensions of the machine which impairs downsizing of the machine. Furthermore, efficiency of heat dissipation may be not optimal due to thermal resistance between the stator and the cooling jacket as a result of contact resistance of the press or shrink fitted cooling jacket and the stator.

Other solutions integrate the cooling ducts into the stator itself rather than using a separate water jacket. For instance, documents EP 0 627 804 A2 and US 8 519 577 B2 discuss cooling the stator by providing cooling channels in the stator.

There is an ongoing need to further improve cooling components of electric machines such as electric motors and generators.

The present invention has been made to solve at least one of the objects stated above.

According to the claim 1, a stack of laminations for a stator of an electric machine is provided. Each lamination comprises a plurality of teeth, and a plurality of holes. The laminations are aligned relatively to one other such that the teeth form winding spaces for receiving stator windings, and the holes form at least one axially extending cooling channel inside the stack. Moreover, adjacent holes of at least two adjacent laminations are geometrically different.

By providing the above defined stack, the cooling channel is formed at least in part by geometrically different holes. This can result in a complex geometry of the cooling channel leading to a turbulent flow of the cooling fluid flowing in the cooling channel. This, in turn, may lead to a better heat transfer between the laminations and the cooling fluid. Geometrically different holes may mean that the holes of differ in size and/or shape and/or orientation.

In one implementation form, a cross-section of the cooling channel varies along the axial direction. For instance, said cross-section may have at least two different shapes and/or sizes and/or orientations along the axial extension of the cooling channel.

It can be envisaged that each lamination and/or a subset of laminations include a first set of holes and a second set of holes, wherein the holes of the first set differ geometrically from the holes of the second set. Thus, at least two different types of holes can be used in a lamination. Some of the laminations, however, may include solely one type of holes.

Optionally, at least two laminations and/or all laminations are equally shaped and sized, in particular with respect to their holes and teeth. However, the angular orientation of the at least two laminations relatively to one other may differ from each other. For instance, at least two adjacent laminations may be rotated relatively to one other such that the holes having different geometries of the adjacent laminations at least partially overlap to form the cooling channel. For example, each lamination comprises n teeth, wherein a second lamination is rotated with respect to a first adjacent lamination by an angle of m * 360°/n, wherein m is an integer greater than 0 and smaller than n. In a particular embodiment, each lamination comprises n teeth, and each lamination is rotated with respect to its adjacent lamination by an angle of 360°/n. This can be particularly advantageous if identical laminations are used being manufactured by the same tool (see also below).

In a further development, at least one cooling channel includes at least one impingement element or impingement structure for laterally deflecting a cooling fluid in said cooling channel. The cooling fluid flow may impact against downstream facing surfaces of the impingement element and/or impingement structure. Laterally deflected means in this context that the flow direction of the cooling fluid has at least a local lateral component that is perpendicular to the axial component. By providing the impingement element or structure inside the cooling channel the cooling fluid flow may be made turbulent. Optionally, the impingement element or structure may be or comprise at least one fin or plate extending inside at least one of the holes. The impingement element or structure may divide the hole into a first subhole and a second subhole.

The teeth may project radially inwardly. Optionally, the holes are located at a side of the lamination opposing the teeth. For instance, the holes are located at a perimeter or circumference of the laminations (e.g. inner or outer perimeter), while the teeth are located at an opposing perimeter or circumference of the laminations (e.g. outer or inner perimeter). In typical embodiments, the laminations encompass a central aperture for receiving a rotor of the electric machine.

The number of cooling holes can be proportional to the number of teeth. Each tooth of a lamination may be assigned a plurality of holes. Preferably, the number of cooling channels exceeds the number of teeth. Thus, each lamination may comprise a number of cooling holes that is greater than the number of teeth of said lamination.

Each lamination may comprise a magnetisable sheet or plate, e.g. made of steel, that is laminated with an electrically insulative coating for electrically insulating the laminations from each other. Optionally, the laminations, in particular the holes and the teeth thereof, are manufactured by the same, or similar, stamping tool or punching tool.

The cooling channels may be connectable to a cooling circuit for cooling the stator of the electric machine. Each cooling channel could comprise an inlet port for receiving a cooling fluid and/or and outlet port for discharging the cooling fluid from the stack. The cooling channels may be part of a cooling circuit. The cooling circuit may include a pump for pumping the cooling fluid through the cooling channels. Furthermore, a heat exchanger may be envisaged in the cooling circuit. In some embodiments, the cooling fluid comprises a liquid such as oil. In some embodiments, the cooling fluid comprises a gas such as air. The cooling fluid can be stable at working temperatures of the machine and/or can have electrically insulating properties.

The present invention also contemplates an electric machine comprising a stator having the above mentioned stack of laminations. The electric machine may be an electric motor or an electric generator. The electric machine may further comprise a rotor that is arranged radially to the stator. In preferred embodiments, the stator radially encompasses the rotor. Alternatively, the rotor may radially encompass the stator.

Furthermore, the present invention provides a method of manufacturing a stack of laminations. The method comprises the steps of
- providing a plurality of laminations, wherein each lamination has a plurality of teeth and a plurality of holes,
- aligning the laminations relatively to one other such that the teeth form winding spaces for receiving stator windings, and the holes form axially extending cooling channels inside the stack.
At least two adjacent holes of adjacent laminations are geometrically different.

Optionally, in the step of providing a plurality of laminations, substantially equally shaped laminations are provided, wherein each lamination includes at least two holes that are geometrically different. Geometrically different may mean that the corresponding holes have a different shape, size and/or orientation. The method may further comprise the step of rotating adjacent laminations such that geometrically different holes of the adjacent laminations at least partially overlap to form the cooling channel.

Typically, the teeth and holes are provided in each lamination by a punching tool or a stamping tool. Preferably, the laminations are manufactured by the same, or similar, stamping or punching tool. This eliminates the need for different stamping or punching tools. By fabricating the laminations with the same tool, the cost of the laminations can be reduced while ease of assembly can be increased.

The method is particularly suited for manufacturing the above mentioned stack of laminations. The skilled person recognizes the features described only with regard to the method may be combined with the features described with regard to the stack and vice versa, as long as they do not contradict each other.

Further features, properties and advantages of the present invention will become clear from the following description of embodiments in conjunction with the accompanying drawings.
Fig. 1 schematically shows a longitudinal cross section of an electric machine according to the prior art.
Fig. 2 schematically shows a part of a first lamination in a frontal view.
Fig. 3 schematically shows a part of a second lamination in a frontal view.
Fig. 4 schematically shows a top view of a section of a cooling channel.
Fig. 5 schematically shows a top view of a section of a further cooling channel.

In the following, for ease of description similar or equal features are indicated by the same reference numerals.

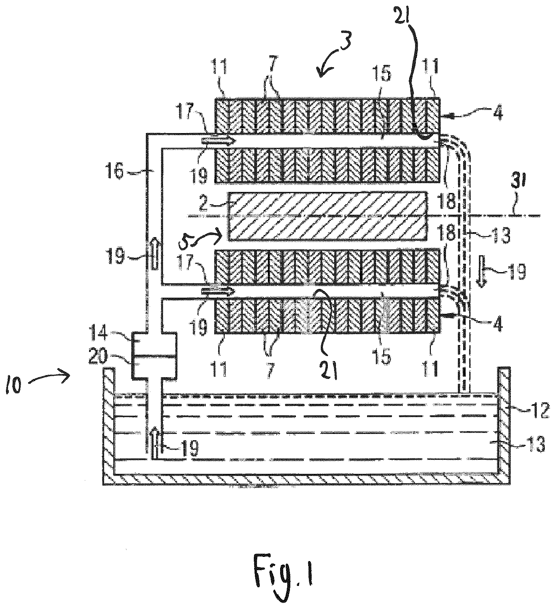

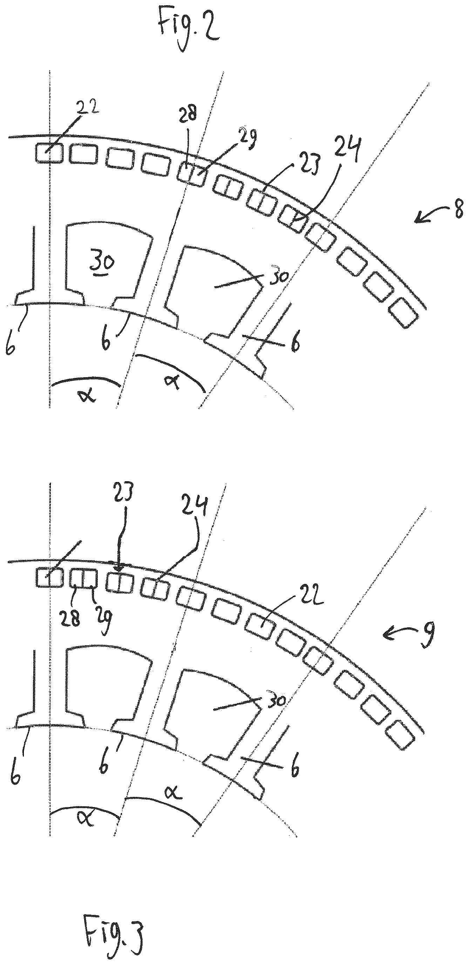

Fig. 1 schematically shows an electric machine 1 according to the prior art, for instance of the electric generator described in US 8 519 577 B2. The electric machine 1 comprises a stator 4 and a rotor 2. The stator 4 comprises a plurality laminations 7 embodied as laminated plates 7 and stator windings that form inductor coils (not shown). The laminations 7 can be located inside a stator housing (not shown). The stator inductor coils are coiled up around teeth 6 formed by the laminations 7, see Figs. 2, 3.

In case the electric machine 1 is a motor, the motor converts electrical energy fed to the stator windings to rotational energy of the rotor 2. The stator windings can be connected to an AC current source to receive alternating current. In alternative embodiments, the electric machine 1 may be a generator that converts mechanical energy of the rotating rotor 2 to electrical energy by means of electromagnetic induction. In this case, the stator windings are connected to an electrical grid for providing alternating current.

The stator 4 defines a central aperture 5. The rotor 2 is located inside the central aperture 5 and is able to rotate about a rotation axis 31. The stator 4 further comprises two end plates 11. The laminations 7 are arranged between the two end plates 11. The end plates 11 are used to compress the laminations 7 to form the laminated stator core and at the same time provide support for the end loops of the stator coils.

Figure 1 further illustrates a cooling circuit 10 for cooling the stator 4 of the electrical machine 1. In a preferred embodiment, the cooling circuit 10 comprises a reservoir 12 filled with a cooling liquid 13, a pump 14 for pumping the cooling liquid, cooling channels 15 and/or a heat exchanger 20 for regulating a temperature of the cooling liquid.

Each stator lamination 7 and each end plate 11 comprises a number of holes 21 which are located such that the holes 21 of the laminations 7 and the holes 21 of the end plates 11 are aligned with each other when the stator 4 is assembled to form a number of cooling channels 15. The cooling channels 15 can be formed by the stator material itself, i.e. they are not covered by a resin or the like.

Each cooling channel 15 may comprise an inlet port 17 which is located in one of the end plates 11 and an outlet port 18 which is located in the opposite end plate 11. The inlet port 17 can be connected to reservoir 12 by means of a tubing 16. The reservoir 12 can be filled with oil as cooling liquid 13. Between the reservoir 12 and the inlet port 17 pump 14 and heat exchanger 20 are located. The heat exchanger 20 can also be placed at another position. The cooling liquid 13 can be pumped by means of the pump 14 through the tubing 16 into the cooling channels 15. In Fig. 1, the direction of the fluid flow is indicated by arrows 19. The cooling liquid 13 which has passed the cooling channels 15 of the stator 4 returns to the reservoir 12 under the influence of gravity alone. Alternatively, the cooling liquid 13 which has passed the cooling channels 15 can be returned back to the reservoir 12 by means of additional tubings.

The inlet ports 17 may be fitted with nipples which facilitate piping. Rubber or plastic tubing 16 can be attached to the nipples. Moreover, the outlet ports 18 can be fitted with orifices that act as simple throttles for the liquid flow. The orifices at the duct outlets 18 ensure even flow through all cooling ducts by ensuring that the pressure loss is generally concentrated at the end of the cooling ducts 15. When the cooling fluid 13 emerges from the cooling channels 15 at the outlet port 18 it may either run through pipes back to the pump 14 or may simply be allowed to fall into the reservoir 12 at the bottom of the generator housing.

Generally, the cooling fluid can be oil as or a similar liquid that is stable at high temperatures, e.g. higher than 100°, or 200°, and preferably has good electrically insulating properties.

Thus, the cooling liquid (or sometimes gas) forced through the cooling channels 15 picks up heat energy from the laminations 7 and carries the heat to outside the machine 1 thus extending the power capability of the machine 1.

In accordance with the present invention, a stack 3 of laminations 7, 8, 9 or a stack of laminations 8, 9 is provided. Thus, laminations 8 and 9 are used in addition to the above described lamination 7 or instead of lamination 7. The stack 3 of laminations 7, 8, 9 can form the stator 4 of the machine 1 and/or can be used in combination with the machine 1 and/or the cooling circuit 10 as described above.

The stack 3 comprises laminations 7, 8, 9, wherein parts of the laminations 8 and 9 are shown in Figs. 2-5 in more detail. In the stack 3, the laminations 7, 8, 9 are in direct abutment with adjacent laminations. The laminations 7, 8, 9 may be pressed against one other such that the resulting cooling channels 25, 35 are fluid tight. This may render additional seals unnecessary.

Each lamination 7, 8, 9 may comprise a metallic plate that is laminated with an electrically insulative coating for electrically insulating the laminations from each other. Generally, the laminations 7, 8, 9 may have a disk shape. The stack 3 may comprise at least 10, at least 100 or at least 1000 laminations or even more, depending on the practical application. Each lamination 7, 8, 9 may have a thickness of at least 0.1 mm and/or at most 1 mm. More specifically, said thickness may be at least 0.25 mm and/or at most 0.5 mm.

Fig. 2 shows a part of a first lamination 8 in a frontal view. Fig. 3 shows a part of a second lamination 9 in a frontal view.

In the embodiments shown, each of the laminations 8, 9 has an inner periphery being defined by an array of inwardly projecting teeth 6. Usually, the teeth 6 are formed in the laminations 8, 9 by stamping out winding slots in the laminations. In the stack 3, the laminations 7, 8, 9 are aligned relatively to one other such that the teeth 6 provide the winding spaces for receiving stator windings of the stator 4. For instance, the number n of teeth 6 of each lamination 7, 8, 9 can be 24, 36 or 48. However, the number n of teeth is not restricted thereto. In alternative embodiments, the number n of teeth 6 may be smaller or greater than 24, 36 or 48.

The stack may comprise a first plurality of laminations 8 and a second plurality of laminations 9. The first and second laminations 8, 9 shown in Figs. 2 and 3 are adjacent laminations in the stack 3. The first and second laminations 8, 9 may have the same structural design (i.e. shape and size). The only difference between the first and second laminations 8, 9 may be that the second lamination 9 is rotated with respect to the first lamination 8. More specifically, the second lamination 9 of the stack 3 is rotated over one tooth 3 with respect to the first lamination 8. Stated otherwise, each lamination 8, 9 comprise n teeth, wherein the second lamination 9 is rotated with respect to the first lamination 8 by angle α of 360°/n.

The first and second laminations comprise a first plurality of holes 22 and a second plurality of holes 23. The holes 22, 23 form at least one axially extending cooling channel 25, 35 inside the stack 3. As shown, the total number of holes 22, 23 is greater than the total number of teeth 6.

The holes 22, 23 are for instance located on a circle which shares its centre point with the rotor 5 of the electrical machine 1. The number of holes 22, 23 on this circle is typically higher than the number of teeth 6/ stator slots that carry the stator windings. The holes 22, 23 however, are not all identical. The holes 22 geometrically differ from the holes 23. For instance, the holes 22, 23 may have a different size, shape and/or orientation. Their geometry is chosen such that, when the stator 4 is stacked according to the process outlined below, cooling channels 25, 35 with complex 3D geometries can be created.

Each of the holes 23 includes an impingement member 24 extending inside the hole 23 such that the hole 23 is divided into two subholes 28, 29. In some instances, the impingement member 24 may be a fin. As the laminations 8, 9 are rotated relatively to one other, the holes 23 having the fins 24 are aligned with the holes 22 without fins.

Thus, differently shaped holes 22, 23 overlap resulting in axially extending cooling channels 25, 35 between holes on successive laminations.

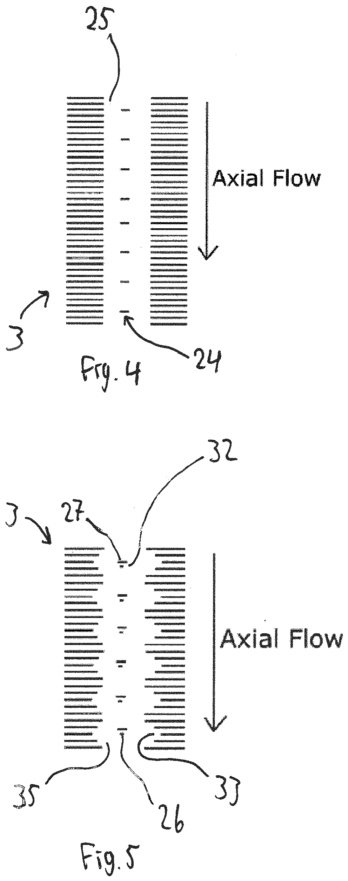

Fig. 4 schematically shows a top view of a section of a cooling channel 25 formed by aligning the holes 22, 23 of the laminations 8, 9. As can be seen from Fig. 4, the impingement member 24 is located in the cooling channel 25 for laterally deflecting a cooling fluid in said cooling channel 25. The streams of cooling fluid are made turbulent by impacts against the downstream surfaces of each impingement member 24.

Fig. 5 schematically shows a top view of a section of a further cooling channel 35. The cooling channel 35 may be formed by aligning differently sized, shaped and/or oriented holes of adjacent laminations 8, 9.

As can be seen from Figs. 4 and 5, each cooling channel 25, 35 has a cross section that varies along the axial direction (i.e. rotation axis 31).

A difference between the cooling channel 35 of Fig. 5 and the cooling channel 24 is that the cooling channel 35 has a varying cross section even in sections of the cooling channel that do not include impingement plates 24. Furthermore, the cooling channel 35 shown in Fig. 5 includes two differently shaped impingement fins or plates 26, 27, while the cooling channel 25 includes solely one kind of impingement fin or plate 24.

By providing some of the punched holes 23 with a "bridge" 24, complex cooling channel geometries can be created. In some of the cooling channels, impingement member 24 is punched. When this lamination is used for stacking, the impingement members 24 will be present in all cooling channels 25, 35 since each lamination 9 is rotated by one tooth 6 with respect to the previous lamination 8. For instance, the second lamination 9 of figure 3 will be placed adjacent to the first lamination 8 of figure 2.

By changing the geometry (size, shape or orientation) of the adjacent holes 22, 23 in the laminations 8, 9, also more complex geometries can be created, with a more pronounced 3D shape of the impingement members 24 or a wall of the cooling channel 25, 35. An example is shown in Fig. 5, where it can be seen that an impingement structure 32 is formed by two adjacent impingement elements 26, 27 of adjacent laminations, the impingement structure 32 approximately having a triangular cross section. Moreover, in Fig. 5 a wall 33 of the channel 35 has an undulated shape. Many other geometries of the cooling channels 25, 35, the wall 33 and impingement elements or structures are possible, and can be the result of an optimization.

The laminations 7, 8, 9 may also include apertures (not shown) for passage therethrough of fasteners, such as an elongated bolt which may be used in the assembly of the stator 4 and may assist in compressing the laminations against each other. Slots along the perimeter of the laminations 7, 8, 9 may be used to align the stacked laminations 7, 8, 9 of the stator 4.

Positioning the cooling channels 25, 35 adjacent the perimeter or circumference of the laminations 7, 8, 9 may prevent interfering with the electromagnetic flux in the lamination 7, 8, 9 generated by energizing the windings.

The invention also relates to a method of manufacturing a stack 3 of laminations for a stator 4 of an electric machine 1. First, a plurality of laminations 8, 9 is provided by punching or stamping laminated metallic plates such that each lamination has a plurality of teeth 6 and a plurality of holes 22, 23. For instance, the teeth 6 and the holes 22, 23 are formed by using a punching tool. The teeth 6 may be formed by punching stator slots into the laminations. The holes 22, 23 are formed by punching apertures into the laminations. The laminations 8, 9 can have the same geometry (e.g. the same shape and size) and are preferably manufactured by the same, or similar, stamping tool or punching tool. Each lamination 8, 9 includes at least two holes 22, 23 that are geometrically different, i.e. have a different shape, size and/or orientation.

In a subsequent step, the laminations 8, 9 are aligned relatively to one other such that the teeth 6 form winding spaces 30 for receiving stator windings, and the holes 22, 23 form axially extending cooling channels 25, 35 inside the stack 3. At least two adjacent holes (22, 23) of adjacent laminations 8, 9 are geometrically different.

During alignment of the laminations, adjacent laminations 8, 9 are rotated by an angle α relatively to one other such that geometrically different holes 22, 23 of the adjacent laminations 8, 9 at least partially overlap to form the cooling channel 25, 35. In particular, the angle α can be m*360°/n, where n is the number of teeth 6 of each lamination, and m is an integer smaller than n and greater than 0.

It should be mentioned that the method is particularly suitable for manufacturing the stack 3 of laminations as described above with reference to Figs. 2-5. Any features described with reference to the stack 3, the machine 1 and/or the cooling circuit 10 can be combined with the features of the method and vice versa as long as they do not contradict each other.

### List of reference numerals

- 1: electric machine
- 2: rotor
- 3: stack of laminations
- 4: stator
- 5: rotor
- 6: teeth
- 7: lamination
- 8: first lamination
- 9: second lamination
- 10: cooling circuit
- 11: end plate
- 12: reservoir
- 13: cooling liquid
- 14: pump
- 15: cooling channel
- 16: tubing
- 17: inlet port
- 18: outlet port
- 19: direction of fluid flow
- 20: heat exchanger
- 21: hole
- 22: hole
- 23: hole
- 24: impingement element
- 25: cooling channel
- 26: impingement element
- 27: impingement element
- 28: subhole
- 29: subhole
- 30: winding space
- 31: rotation axis
- 32: impingement structure
- 33: wall of cooling channel
- 35: cooling channel
- α: angle formed by adjacent teeth

## Claims

1. Stack (3) of laminations (8, 9) for a stator (4) of an electric machine (1),
wherein each lamination (8, 9) comprises a plurality of teeth (6), and a plurality of holes (22, 23),
wherein the laminations (8, 9) are aligned relatively to one other such that
- the teeth (6) form winding spaces (30) for receiving stator windings, and
- the holes (22, 23) form at least one axially extending cooling channel (25, 35) inside the stack (3),
wherein adjacent holes (22, 23) of at least two adjacent laminations (8, 9) are geometrically different.

2. Stack (3) according to claim 1, wherein a cross-section of the cooling channel (25, 35) varies along the axial direction.

3. Stack (3) according to any one of the preceding claims, wherein the adjacent holes (22, 23) of adjacent laminations (8, 9) differ in size and/or shape and/or orientation.

4. Stack (3) according to any one of the preceding claims, wherein all laminations (8, 9) are equally shaped and sized with respect to their teeth (6) and holes (22, 23), wherein at least two adjacent laminations (8, 9) are rotated relatively to one other such that the holes (22, 23) having different geometries of the adjacent laminations (8, 9) at least partially overlap to form the cooling channel (25, 35).

5. Stack (3) according to any one of the preceding claims, wherein each lamination comprises n teeth, and each lamination (9) is rotated with respect to its adjacent lamination (8) by an angle (α) of 360°/n.

6. Stack (3) according to any one of the preceding claims, wherein at least one cooling channel (25, 35) includes at least one impingement element (24, 26, 27) or impingement structure (32) for laterally deflecting a cooling fluid in said cooling channel (25, 35).

7. Stack (3) according to claim 6, wherein the impingement element (24, 26, 27) or impingement structure (32) is formed by at least one fin or plate extending inside at least one of the holes (23).

8. Stack (3) according to any one of the preceding claims, wherein each lamination and/or a subset of laminations include a first set of holes (22) and a second set of holes (23), wherein the holes (22) of the first set differ geometrically from the holes (23) of the second set.

9. Stack (3) according to any one of the preceding claims, wherein the holes (22, 23) are located at an outer perimeter of the laminations (8, 9) and/or the teeth (6) project radially inwardly.

10. Stack (3) according to any one of the preceding claims, wherein the laminations (8, 9) encompass a central aperture (5) for receiving a rotor (2).

11. Stack (3) according to any one of the preceding claims, wherein the number of cooling channels (25, 35) exceeds the number of teeth (6).

12. Electric machine (1), particularly an electric motor or generator, comprising a stator (4) having the stack (3) of laminations (8, 9) in accordance with any one of the preceding claims.

13. Method of manufacturing a stack (3) of laminations for a stator (4) of an electric machine (1), comprising the steps of
- providing a plurality of laminations (8, 9), wherein each lamination has a plurality of teeth (6) and a plurality of holes (22, 23),
- aligning the laminations (8, 9) relatively to one other such that
∘ the teeth (6) form winding spaces (30) for receiving stator windings, and
∘ the holes (22, 23) form axially extending cooling channels (25, 35) inside the stack (3),
wherein at least two adjacent holes (22, 23) of adjacent laminations (8, 9) are geometrically different.

14. Method according to claim 13, wherein, in the step of providing a plurality of laminations (8, 9), substantially equally shaped laminations (8, 9) are provided, wherein each lamination includes at least two holes (22, 23) that are geometrically different, the method further comprising the step of
- rotating adjacent laminations (8, 9) such that geometrically different holes (22, 23) of the adjacent laminations (8, 9) at least partially overlap to form the cooling channel (25, 35).

15. Method according to claim 14, wherein the laminations (8, 9) are manufactured by the same, or similar, stamping tool or punching tool.
